# EUROPÄISCHE PATENTANMELDUNG

(11) **EP 4 494 531 A1**
(43) Veröffentlichungstag der Anmeldung: **22.01.2025**
(21) Anmeldenummer: 24183086.8
(22) Anmeldetag: 19.06.2024
(51) Int. Cl.: A47J 31/52, A47J 31/60

(54) **VERFAHREN ZUM BETREIBEN EINES GETRÄNKEZUBEREITUNGSGERÄTES, STEUEREINHEIT UND GETRÄNKEZUBEREITUNGSGERÄT**

(30) Priorität: 17.07.2023 BE 202305597
(71) Anmelder: Miele & Cie. KG, 33332 Gütersloh (DE)
(72) Erfinder: Last, Mario, 33739 Bielefeld (DE); Tembaak, Jutta, 49492 Westerkappeln (DE)

(57) **Zusammenfassung**

Die Erfindung betrifft ein Verfahren Betreiben eines Getränkezubereitungsgerätes (100), wobei das Verfahren die folgenden Schritte umfasst:
Einlesen (301) eines Temperatursignals (226) über eine Schnittstelle zu einem Temperatursensor (222), wobei das Temperatursignal (226) eine aktuelle Temperatur von in einem Wassertank (106) bevorrateten Wasser anzeigt;
Bereitstellen (303) eines Aufforderungssignals (232) an eine Schnittstelle zu einer Anzeigeeinrichtung (112) des Getränkezubereitungsgeräts (100), um eine Aufforderung (460, 462) zum Befüllen des Wassertanks (106) mit Wasser einer von der aktuellen Temperatur abweichende Temperatur anzuzeigen, wenn die von dem Temperatursignal (226) angezeigte Temperatur innerhalb eines Unzulässigkeitsbereichs liegt;
Bereitstellen (305) eines Durchführsignals zum Durchführen eines Reinigungsvorgangs oder einer Getränkezubereitung, wenn die von dem Temperatursignal (226) angezeigte Temperatur innerhalb eines Sollbereichs liegt.

## Beschreibung

Die Erfindung betrifft ein Verfahren zum Betreiben eines Getränkezubereitungsgerätes, eine Steuereinheit und ein Getränkezubereitungsgerät, beispielsweise einen Kaffeevollautomaten.

Getränkezubereitungsgeräte müssen regelmäßig gereinigt werden, beispielsweise entkalkt oder entfettet. Die DE20312094 U1 befasst sich mit einer Reinigungstablette zum Reinigen der Brühkammer eines Kaffeeautomaten.

Der hier vorgestellte Ansatz stellt sich die Aufgabe, ein verbessertes Betreiben eines Getränkezubereitungsgerätes, eine verbesserte Steuereinheit und ein verbessertes Getränkezubereitungsgerät zu schaffen.

Erfindungsgemäß wird diese Aufgabe durch ein Verfahren Betreiben eines Getränkezubereitungsgerätes, eine Steuereinheit und ein Getränkezubereitungsgerät mit den Merkmalen der unabhängigen Ansprüche gelöst. Vorteilhafte Ausgestaltungen und Weiterbildungen der Erfindung ergeben sich aus den jeweils nachfolgenden abhängigen Ansprüchen.

Die mit der Erfindung erreichbaren Vorteile bestehen neben der Unterstützung eines Benutzers bei der Handhabung eines Getränkezubereitungsgerät in einer Optimierung einer Anwendung eines zum Reinigen des Getränkezubereitungsgeräts verwendeten Reinigungsmittels. Ferner wird das Zubereiten von Getränken zuverlässiger gestaltet, weil sichergestellt wird, dass das im Tank bevorratete Wasser die optimale Zubereitungstemperatur hat. Wenn der Anwender zu heißes Wasser in den Tank füllt, kann beim anschließenden Brühvorgang der Heizblock bzw. Durchlauferhitzer überhitzen, was zu einer störbehafteten Unterbrechung der Gerätefunktion führt. Da der Anwender auf das zu heiße Wasser mittels der Anzeigevorrichtung oder Ausgabevorrichtung hingewiesen wird, bevor der Brühvorgang aktiviert wird, wird kein fehlerhafter Brühvorgang gestartet. Das Gerät bleibt ohne Unterbrechung betriebsbereit.

Das Verfahren zum Betreiben eines Getränkezubereitungsgerätes umfasst dabei die folgenden Schritte:
Einlesen eines Temperatursignals über eine Schnittstelle zu einem Temperatursensor, wobei das Temperatursignal eine aktuelle Temperatur von in einem Wassertank bevorrateten Wasser anzeigt;
Bereitstellen eines Aufforderungssignals an eine Schnittstelle zu einer Anzeigeeinrichtung des Getränkezubereitungsgeräts, um eine Aufforderung zum Befüllen des Wassertanks mit Wasser einer von der aktuellen Temperatur abweichende Temperatur anzuzeigen, wenn die von dem Temperatursignal angezeigte Temperatur innerhalb eines Unzulässigkeitsbereichs liegt;
Bereitstellen eines Durchführsignals zum Durchführen eines Reinigungsvorgangs oder einer Getränkezubereitung, wenn die von dem Temperatursignal (226) angezeigte Temperatur innerhalb eines Sollbereichs liegt.

Ein Verfahren zum Durchführen eines Reinigungsvorgangs für ein Getränkezubereitungsgerät gemäß einer zweckmäßigen Ausführung umfasst die folgenden Schritte:
Einlesen eines Temperatursignals über eine Schnittstelle zu einem Temperatursensor, wobei das Temperatursignal eine aktuelle Temperatur von in einem Wassertank bevorrateten Wasser anzeigt;
Bereitstellen eines Aufforderungssignals an eine Schnittstelle zu einer Anzeigeeinrichtung des Getränkezubereitungsgeräts, um eine Aufforderung zum Befüllen des Wassertanks mit Wasser einer von der aktuellen Temperatur abweichende Temperatur anzuzeigen, wenn die von dem Temperatursignal angezeigte Temperatur innerhalb eines Unzulässigkeitsbereichs liegt;
Bereitstellen eines Anweisungssignals an eine Schnittstelle zu der Anzeigeeinrichtung des Getränkezubereitungsgeräts, um eine Anweisung zum Einfüllen von Reinigungsmittel anzuzeigen, wenn die von dem Temperatursignal angezeigte Temperatur innerhalb eines Sollbereichs liegt; und
Bereitstellen eines Durchführsignals zum Durchführen eines Reinigungsprozesses des Reinigungsvorgangs ansprechend auf ein erfolgtes Einfüllen des Reinigungsmittels.

Das Getränkezubereitungsgerät kann zum Zubereiten und Ausgeben von Heiß- oder Kaltgetränken vorgesehen sein. Dabei kann das Getränkezubereitungsgerät als ein Einbaugerät oder ein Standgerät ausgeführt sein. Beispielsweise kann das Getränkezubereitungsgerät ein Kaffeevollautomat sein. Unter einem Reinigungsvorgang kann ein zumindest teilautomatisiert ablaufender Vorgang verstanden werden, durch den das Getränkezubereitungsgerät gereinigt wird. Dabei kann es sich um einen bei Getränkezubereitungsgeräten üblichen Vorgang handeln, durch den das Getränkezubereitungsgerät beispielsweise entkalkt oder entfettet wird. Dazu können bekannte Reinigungsmittel eingesetzt werden, die beispielsweise eine entkalkende oder entfettende Wirkung haben. Typischerweise werden solche Reinigungsmittel vor Beginn des eigentlichen Reinigungsprozesses unter Verwendung von Wasser aus dem Wassertank des Getränkezubereitungsgeräts gelöst, wobei die Temperatur des verwendeten Wassers für das Auflösen relevant ist. Eine zu geringe Temperatur kann beispielsweise die für die Auflösung erforderliche Zeit verlängern und zudem die Reinigungswirkung des Reinigungsmittels verringern. Eine zu hohe Temperatur kann ebenfalls die Reinigungswirkung des Reinigungsmittels verringern. Vorteilhafterweise kann daher die Temperatur des zum Auflösen verwendeten Wassers erfasst und bei der Durchführung des Reinigungsvorgangs berücksichtigt werden. Bei dem dazu verwendeten Temperatursensor kann es sich um einen geeigneten Sensor, beispielsweise um einen Messwiderstand handeln. Unter Verwendung des Temperatursensors kann die Temperatur direkt am Wassertank oder beabstandet zu dem Wassertank erfasst werden. Die Anzeigeeinrichtung kann beispielsweise ein Display sein. Zusätzlich oder alternativ zu einer optischen Anzeige kann die Anzeigeeinrichtung ausgebildet sein, um eine Aufforderung oder Anweisung akustisch auszugeben. Das Aufforderungssignal kann ein elektrisches Ansteuersignal sein, mit dem die Anzeigeeinrichtung so angesteuert werden kann, dass einem Benutzer die Aufforderung zum Befüllen des Wassertanks mit Wasser der von der aktuellen Temperatur abweichenden Temperatur angezeigt wird, wenn die von dem Temperatursignal angezeigte Temperatur innerhalb eines Unzulässigkeitsbereichs liegt. Durch das Befüllen kann die Temperatur des sich innerhalb des Wassertanks befindlichen Wassers so verändert werden, dass die Temperatur im Sollbereich oder in einem optional zwischen dem Unzulässigkeitsbereich und dem Sollbereich liegenden Toleranzbereich liegt. Nach erfolgter Befüllung kann der Schritt des Einlesens des Temperatursignals erneut ausgeführt werden. Bei dem Anweisungssignal kann es sich ebenfalls um ein Steuersignal handeln, das geeignet ist, um die Anzeigeeinrichtung so anzusteuern, dass die Anweisung zum Einfüllen des Reinigungsmittels angezeigt wird, wenn die von dem Temperatursignal angezeigte Temperatur innerhalb eines Sollbereichs liegt. Das Durchführsignal kann ein Steuersignal darstellen, mit dem zum Durchführen des Reinigungsprozesses verwendete Einrichtungen des Getränkezubereitungsgerät angesteuert werden, wenn das sich in dem Wassertank befindliche Wasser eine zum Durchführen des Reinigungsprozesses geeignete Temperatur aufweist und sich das Reinigungsmittel in dem Getränkezubereitungsgerät befindet. Zum Durchführen des Reinigungsprozesses wird ansprechend auf das Durchführsignal beispielsweise eine Pumpe zum Fördern des Wassers aktiviert. Das Einfüllen des Reinigungsmittels kann automatisiert erkannt werden oder durch eine Eingabe des Benutzers bestätigt werden.

Das Verfahren kann auch zum Betreiben eines Getränkezubereitungsgerätes zum Zubereiten eines Getränks verwendet werden. Zum Zubereiten eines Getränks werden alle vorgenannten Schritte durchgeführt, mit Ausnahme der Schritte, die Anweisungen zur Handhabung des Reinigungsmittels betreffen. Diese Schritte werden bei der Zubereitung weggelassen.

Das Verfahren kann einen Schritt des Bereitstellens eines Pumpsignals an eine Schnittstelle zu einer Pumpe umfassen. Unter Verwendung des Pumpsignals kann eine Testmenge des in dem Wassertank bevorrateten Wassers zu dem Temperatursensor gepumpt werden. Vorteilhafterweise ermöglicht dies eine Anordnung des Temperatursensors in einer die Pumpe mit dem Wassertank verbindenden Leitung.

Das Pumpsignal kann ein Pumpen der Teilmenge bewirken, die kleiner als 3ml ist. Beispielsweise kann die Teilmenge auch kleiner als 2ml sein. Dadurch wird sichergestellt, dass auch nach Entnahme der Teilmenge noch eine ausreichend große Wassermenge im Wassertank ist. Dies ist beispielsweise wichtig, wenn das Reinigungsmittel direkt in den Wassertank eingefüllt wird.

Das Verfahren kann einem Schritt des Anpassens eines Werts einer Auflösezeitdauer umfassen. Die Auflösezeitdauer kann dabei zwischen dem Einfüllen des Reinigungsmittels und einem Beginn eines Reinigungsprozesses des Reinigungsvorgangs liegen. Der Schritt des Anpassens kann durchgeführt werden, wenn die von dem Temperatursignal angezeigte Temperatur innerhalb eines Toleranzbereichs liegt. Der Toleranzbereich kann dabei außerhalb des Sollbereichs und außerhalb des Unzulässigkeitsbereichs liegen. Durch das Anpassen kann eine für den Sollbereich vorgegebene Auflösezeitdauer je nach aktueller Temperatur des Wassers verlängert oder reduziert werden.

Beispielsweise kann dabei der Wert der Auflösezeitdauer erhöht werden, wenn die von dem Temperatursignal angezeigte Temperatur innerhalb eines an eine Untergrenze des Sollbereichs anschließenden unteren Toleranzbereichs liegt. Entsprechend kann der Wert der Auflösezeitdauer verringert werden, wenn die von dem Temperatursignal angezeigte Temperatur innerhalb eines an eine Obergrenze des Sollbereichs anschließenden oberen Toleranzbereichs liegt. Dadurch kann beispielsweise eine Auflösung des Reinigungsmittels bei niedriger Temperatur gewährleistet und eine Schädigung des Reinigungsmittels bei hoher Temperatur vermieden werden.

Im Schritt des Bereitstellens kann das Aufforderungssignal bereitgestellt werden, um die Aufforderung zum Befüllen des Wassertanks mit handwarmen Wasser anzuzeigen. Dadurch kann dem Benutzer ein Hinweis auf die erforderliche Wassertemperatur gegeben werden.

Im Schritt des Bereitstellens des Aufforderungssignals kann das Aufforderungssignal bereitgestellt werden, um eine Aufforderung zum Befüllen des Wassertanks mit kühlem Wasser anzuzeigen, wenn die von dem Temperatursignal angezeigte Temperatur einen Heißwert überschreitet. Entsprechend kann im Schritt des Bereitstellens des Aufforderungssignals das Aufforderungssignal bereitgestellt werden, um eine Aufforderung zum Befüllen des Wassertanks mit warmen Wasser anzuzeigen, wenn die von dem Temperatursignal angezeigte Temperatur einen Kaltwert unterschreitet. Dadurch kann die Wassertemperatur jeweils zügig an die erforderliche Wassertemperatur angeglichen werden.

Der Unzulässigkeitsbereich kann beispielsweise eine Temperatur von weniger als 25°C, insbesondere von weniger als 20°C, sowie beispielsweise eine Temperatur von mehr als 45°C, insbesondere von mehr als 50°C umfassen. Dabei kann der Unzulässigkeitsbereich entsprechend dem verwendeten Reinigungsmittel gewählt werden. Bei entsprechenden Temperaturen kann eine Fortführung des Reinigungsvorgangs unterbrochen werden, da bei diesen Temperaturen ein gewünschtes Reinigungsergebnis nicht erreicht werden kann.

Der Sollbereich kann beispielsweise eine Temperatur zwischen 30°C und 40°C umfassen. Dabei kann der Sollbereich entsprechend dem verwendeten Reinigungsmittel gewählt werden. Dieser Temperaturbereich kann geeignet sein, um eine optimale Reinigungswirkung zu erreichen.

Der hier vorgestellte Ansatz schafft ferner eine Steuereinheit, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Ein Getränkezubereitungsgerät weist folgende Merkmale auf:
einen Wassertank zum Bevorraten von Wasser;
einen Thermoblock zum Temperieren des Wassers für eine Getränkezubereitung;
eine Pumpe zum Pumpen des Wassers aus dem Wassertank zu dem Thermoblock; und
einen Temperatursensor, der ausgebildet ist, um ein Temperatursignal bereitzustellen, das eine aktuelle Temperatur des in dem Wassertank bevorrateten Wasser anzeigt.

Vorteilhafterweise ermöglicht das von dem Temperatursensor bereitgestellte Temperatursignal eine Überwachung der Temperatur des für den Reinigungsvorgang verwendeten Wasser. Der Temperatursensor kann dabei an einer geeigneten Position an dem Getränkezubereitungsgerät angeordnet sein.

Beispielsweise kann der Temperatursensor an einer den Wassertank mit der Pumpe verbindenden Leitung angeordnet sein. Dadurch kann die Temperatur des Wassers ansprechend auf eine kurzzeitige Aktivierung der Pumpe erfasst werden.

Zur Durchführung eines Reinigungsvorgangs kann das Getränkezubereitungsgerät eine genannte Steuereinheit umfassen, die es beispielsweise ermöglicht den Temperatursensor auszulesen und die Pumpe zu betreiben.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Auch wenn der beschriebene Ansatz anhand eines Haushaltgeräts beschrieben wird, kann der hier beschriebene Ansatz entsprechend im Zusammenhang mit einem gewerblichen oder professionellen Gerät eingesetzt werden.

Ein Ausführungsbeispiel der Erfindung ist in den Zeichnungen rein schematisch dargestellt und wird nachfolgend näher beschrieben. Es zeigt
- Figur 1: eine Darstellung eines Ausführungsbeispiel eines Getränkezubereitungsgeräts;
- Figur 2: eine schematische Darstellung eines Ausführungsbeispiel eines Getränkezubereitungsgeräts;
- Figur 3: ein Ablaufdiagramm eines Ausführungsbeispiel eines Verfahrens zum Durchführen eines Reinigungsvorgangs für ein Getränkezubereitungsgerät; und
- Figur 4: ein Ablaufdiagramm eines Ausführungsbeispiel eines Verfahrens zum Durchführen eines Reinigungsvorgangs für ein Getränkezubereitungsgerät.

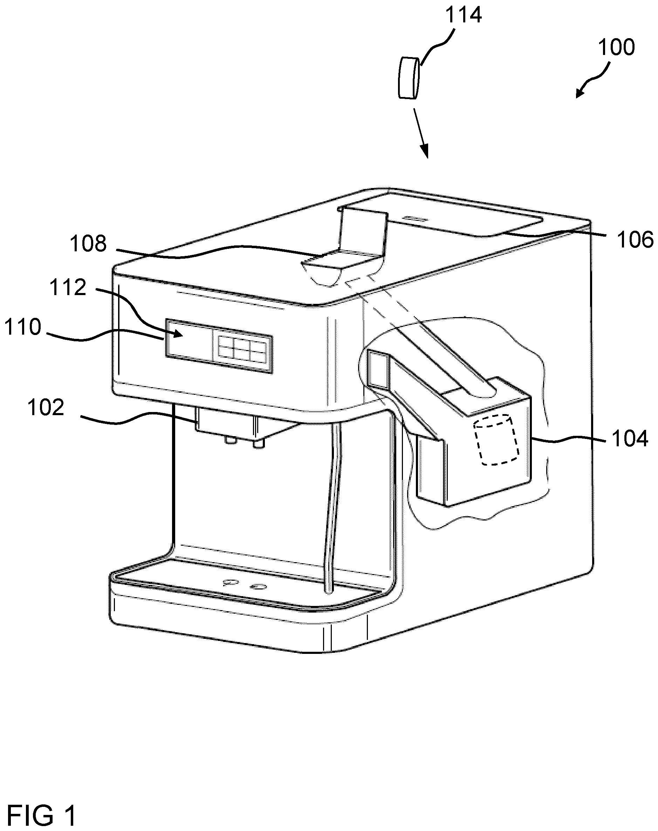

Figur 1 zeigt eine Darstellung eines Ausführungsbeispiel eines Getränkezubereitungsgeräts 100. Beispielhaft ist das Getränkezubereitungsgerät 100 als ein Kaffeevollautomat ausgeführt. Das Getränkezubereitungsgerät 100 weist beispielhaft einen Auslass 102 zum Ausgeben eines zubereiteten Getränks, eine Brüheinheit 104 zum Zubereiten des Getränks, einen Wassertank 106 zum Bevorraten von Wasser, das zum Zubereiten des Getränks oder zum Reinigen des Getränkezubereitungsgeräts 100 verwendet werden kann, einen Eingabeschacht 108 für Kaffeepulver und eine Bedieneinheit 110 auf. Über die Bedieneinheit 112 kann ein Benutzer beispielsweise einen Getränkewunsch eingeben oder ein Reinigungsprogramm auswählen. Die Bedieneinheit 110 umfasst gemäß einem Ausführungsbeispiel eine Anzeigeeinrichtung 112 über die dem Benutzer Mitteilungen angezeigt werden können.

Um das Getränkezubereitungsgerät 100 zu reinigen wird gemäß einem Ausführungsbeispiel ein Reinigungsmittel 114 verwendet, das von dem Benutzer in das Getränkezubereitungsgerät 100 eingegeben wird. Wenn als ein Reinigungsvorgang eine Entkalkung des Getränkezubereitungsgeräts 100 durchgeführt wird, ist es gemäß einem Ausführungsbeispiel erforderlich, dass der Benutzer das Reinigungsmittel 114, beispielsweise eine Entkalkungstablette, in den Wassertank 106 eingibt. Optional ist der Wassertank 106 entnehmbar ausgeführt. Wenn als ein Reinigungsvorgang eine Entfettung des Getränkezubereitungsgeräts 100 durchgeführt wird, ist es gemäß einem Ausführungsbeispiel erforderlich, dass der Benutzer das Reinigungsmittel 114, beispielsweise eine Reinigungstablette, in den Eingabeschacht 108 eingibt.

Der hier beschriebene Ansatz ermöglicht eine automatische Temperaturkontrolle des Wassers bei Reinigungsvorgängen. Dazu wird ein Temperatursensor eingesetzt, mit dem sich die Temperatur des in dem Wassertank 106 bevorrateten Wassers erfasst werden kann. Dadurch kann ein vollständiges Auflösen des Reinigungsmittels 114, beispielsweise einer Reinigertablette und eine Wirkung der Reinigerlösung sichergestellt werden.

Wenn das Getränkezubereitungsgerät 100 als ein anderes Gerät ausgeführt ist, beispielsweise als ein Gerät zur Ausgabe von Kaltgetränken oder Suppen können beispielsweise anstelle der Brüheinheit 104 und des Eingabeschachts 108 andere Einheiten vorgesehen sein und die Eingabe des Reinigungsmittels 114 kann auf eine andere geeignete Weise erfolgen, optional auch automatisiert.

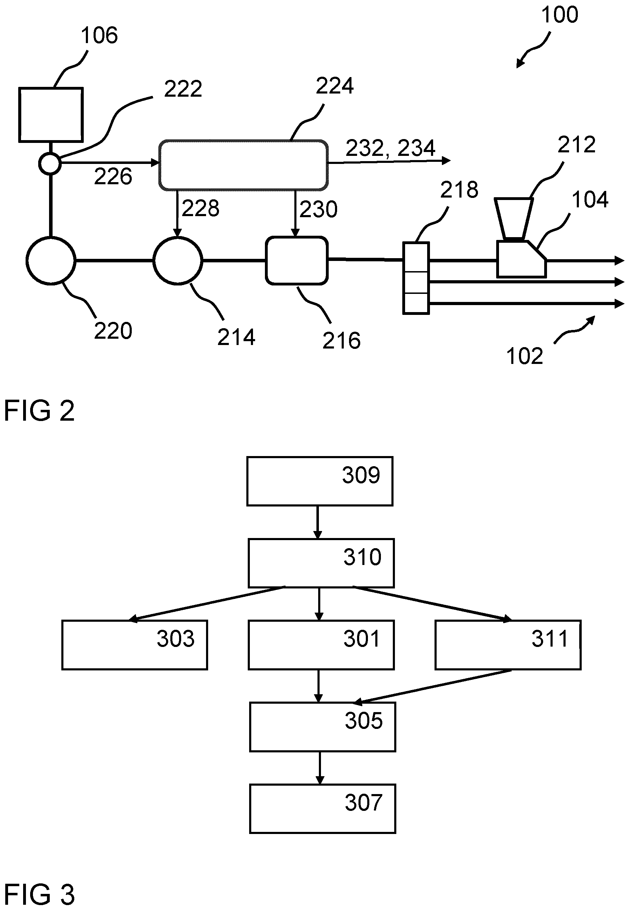

Figur 2 zeigt eine schematische Darstellung eines Ausführungsbeispiel eines Getränkezubereitungsgeräts 100, beispielsweise des anhand von Figur 1 beschriebenen Geräts.

Das Getränkezubereitungsgerät 100 weist den Auslauf 102, die Brüheinheit 104 und den Wassertank 106 auf. Beispielhaft ist die Brüheinheit 104 zusammen mit einem Mahlwerk 212 dargestellt.

Der Wassertank 106 ist über eine Leitung, in der eine Pumpe 214 und ein Thermoblock 216 angeordnet sind, mit einem Ventil 218 verbunden. Die Leitung ist dabei Teil eines Fluidsystems des Getränkezubereitungsgeräts 100. Somit kann Wasser aus dem Wassertank 106 unter Verwendung der Pumpe 214 über die Leitung zu dem Ventil 218 gefördert und unter Verwendung des Thermoblocks 216 temperiert, gemäß einem Ausführungsbeispiel erhitzt, werden. Das Ventil 218 weist eine Mehrzahl von Ventilstellungen auf, sodass ein Ausgang der Leitung mit unterschiedlichen zu dem Auslauf 102 führenden Ausgangsleitungen verbunden kann. Beispielhaft führt eine erste Ausgangsleitung über die Brüheinheit 104 zu dem Auslauf 102 und ermöglicht die Ausgabe von Kaffee. Eine zweite Ausgangsleitung ist beispielsweise zur Ausgabe von Dampf für Milch und eine dritte Ausgangsleitung zur Ausgabe von Heißwasser vorgesehen.

Optional ist ein Filtermodul 220 in der Leitung angeordnet, beispielhaft zwischen dem Wassertank 106 und der Pumpe 214.

Ein Temperatursensor 222 ist vorgesehen, um die Temperatur des Wassers in dem Wassertank 106 direkt oder indirekt zu erfassen. Dazu ist der Temperatursensor 220 an einer geeigneten Position im Getränkezubereitungsgerät 100 platziert, hier beispielhaft in oder an der Leitung im Bereich eines Anschlusses der Leitung an den Wassertank 106.

Optional ist ein weiterer Temperatursensor vorgesehen, der verwendet wird, um die Temperatur des von dem Thermoblock erhitzten Wassers zu erfassen.

Optional weist das Getränkezubereitungsgerät 100 eine Steuereinheit 224 auf, die ausgebildet ist, um Schritte zum Durchführen eines Reinigungsvorgangs zu steuern oder auszuführen. Gemäß einem Ausführungsbeispiel ist die Steuereinheit 224 ausgebildet, um ein Temperatursignal 226, das eine von dem Temperatursensor 222 erfasste Temperatur repräsentiert, über eine Schnittstellt zu dem Temperatursensor 222 einzulesen und ein Pumpsignal 228 zum Steuern eines Betriebs der Pumpe 214 an eine Schnittstelle zu der Pumpe 214 sowie optional ein Heizsignal 230 zum Steuern eines Betriebs des Thermoblocks 216 an eine Schnittstelle zu dem Thermoblock 216 bereitzustellen. Gemäß einem Ausführungsbeispiel ist die Steuereinheit 224 ausgebildet um Steuersignale, beispielsweise ein Aufforderungssignal 232 und/oder ein Anweisungssignal 234, an eine Schnittstelle zu einer Anzeigeeinrichtung des Getränkezubereitungsgeräts 100 auszugeben.

Optional sind einer oder mehrere Funktionsblöcke der Steuereinheit in einer Logikschaltung des Temperatursensors 222 integriert.

Gemäß einem Ausführungsbeispiel wird der Benutzer, um das Getränkezubereitungsgerät 100, das hier beispielhaft als ein Kaffeevollautomat ausgeführt ist, zu entkalken oder die Brüheinheit 104 und ein optionales Milchsystem zu reinigen, dazu aufgefordert, den Wassertank 106 mit lauwarmen Wasser zu füllen und das Reinigungsmittel, beispielsweise die jeweilige Tablette, darin aufzulösen.

Die Reinigungsmittel lösen sich nur bei bestimmten Temperaturen richtig auf und reagieren auf zu heiße Temperaturen empfindlich, wodurch es beispielsweise zu einer Zerstörung bestimmter Inhaltsstoffe kommen kann.

Daher ist es wichtig, dass der Benutzer Wasser mit einer Temperatur zwischen 30 und 40 °C in den Wassertank 106 füllt. Da jeder Mensch ein anderes Temperaturempfinden hat, wird die Temperatur selten eingehalten.

Das in Figur 2 gezeigte Fluidsystem ist aufgrund des Temperatursensors 222 für eine automatische Prüfung der Wassertemperatur im Wassertank 106 geeignet.

Durch eine Auswertung des Temperatursignals 226 kann verhindert werden, dass Wasser mit einer ungeeigneten Temperatur für den Reinigungsprozess verwendet wird, wodurch der Reinigungsprozess mit zu geringen Konzentrationen oder mit geschädigtem Reinigungsmittel erfolgen könnte und das Fluidsystem durch nicht aufgelösten Reiniger verstopfen könnte.

Unter Verwendung des Temperatursignals 226 kann der Benutzer bei der Herstellung einer Reinigungslösung so unterstützt werden, dass sichergestellt ist, dass zur Auflösung des Reinigungsmittels die richtige Wassertemperatur im Wassertank 106 herrscht. Dabei soll ausgeschlossen werden, dass entweder zu kaltes, beispielsweist mit einer Temperatur von unter 20 °C, oder zu heißes Wasser, beispielsweise mit einer Temperatur über 50 °C eingefüllt wird. Kleinere Abweichungen hingegen können toleriert werden, indem das Verfahren entsprechend der Temperatur angepasst wird.

Damit werden durch nicht vollständig aufgelöste Reinigungsmittel Schadensfälle im Gerät vermieden, die Kundenzufriedenheit verbessert und Reklamationsfälle verringert.

Gemäß einem Ausführungsbeispiel füllt der Benutzer zu Beginn eines Reinigungsvorgangs zunächst den Wassertank 106 mit "handwarmen" Wasser und setzt den Wassertank 106 nachdem er gefüllt ist ohne Reiniger ins Gerät, hier dem Getränkezubereitungsgerät 100.

Da nicht sicher ist, ob für das Wasser im Wassertank 106 die Solltemperatur eingehalten wird, erfolgt nun vom Getränkezubereitungsgerät 100 eine automatische Prüfung der Wassertemperatur, indem die Pumpe 214 eine geringe Menge Wasser aus dem Wassertank 106 in das Fluidsystem fördert.

Der Temperatursensor 222, der beispielsweise im Fluidsystem ausgeführt ist, misst die Temperatur des Wassers und vergleicht den Messwert gemäß einem Ausführungsbeispiel mit dem Sollwert. Alternativ wird ein entsprechender Vergleich gemäß einem Ausführungsbeispiel unter Verwendung einer separat zu dem Temperatursensor 222 angeordneten Steuereinheit 224 durchgeführt. Beispielsweise ist der Temperatursensor 222 als ein Heißleiter, ein sogenannter NTC (Negative Temperature Coefficient Thermistor) ausgeführt.

Bewegt sich der durch das Temperatursignal 222 repräsentierte Messwert beispielsweise zwischen 25 °C und 30 °C, wird die Zeit, die dem System zum Auflösen des Reinigers gegeben wird, entsprechend angepasst, d. h. verlängert, beispielsweise um einen Faktor von 1,5.

Bewegt sich der Messwert beispielsweise zwischen 40 °C und 50 °C, wird die Zeit, die dem System zum Auflösen des Reinigers gegeben wird, entsprechend angepasst, d. h. verkürzt, beispielsweise um einen Faktor von 0,75.

Ist der Messwert beispielsweise < 20 °C oder > 50 °C, wird der Benutzer dazu aufgefordert, handwarmes Wasser einzufüllen.

Sobald am Messpunkt des Temperatursensors 222 eine Temperatur gemessen wird, die dem Sollwert in den entsprechenden Grenzen entspricht, wird der Benutzer aufgefordert, das Reinigungsmittel einzufüllen und der Reinigungsprozess beginnt, beispielsweise gesteuert von der Steuereinheit 224.

Gemäß einem Ausführungsbeispiel ist dazu zwischen dem Wassertank 106 und dem Thermoblock 216 der Temperatursensor 222, beispielhaft in Form eines zusätzlichen NTC angebracht, der die Wassertemperatur aus dem Wassertank 106 misst. Idealerweise ist der Temperatursensor 222 nahe am Wassertank 106 verbaut, um so wenig Wasser wie möglich für den Messvorgang zu verbrauchen. Im Grunde handelt es sich dabei dann nur noch um eine aus dem Wassertank 106 entnommene Wassermenge von weniger als 2 ml.

Gemäß einem Ausführungsbeispiel gibt es im Fluidsystem des Getränkezubereitungsgerät 100 hinter dem Thermoblock 216 bereits einen NTC, der jedoch für das hier beschriebene Verfahren nicht wirklich genutzt werden kann, da die von diesem NTC die gemessene Temperatur typischerweise nicht der Wassertemperatur im Wassertank entspricht. Wenn der Thermoblock 216 von einem vorherigen Prozess noch warm ist, würde beispielsweise eine höhere Temperatur vorgetäuscht werden. Außerdem liegt dieser NC relativ weit vom Wassertank 106 entfernt, sodass für eine Messung der Wassertemperatur im Wassertank deutlich mehr Wasser verschwendet wird, beispielsweise mehr als 12 ml, statt weniger als 2 ml bei dem wassertanknahem Temperatursensor 222.

Figur 3 zeigt ein Ablaufdiagramm eines Ausführungsbeispiel eines Verfahrens zum Durchführen eines Reinigungsvorgangs für ein Getränkezubereitungsgerät, wie es beispielhaft anhand der vorangegangenen Figuren beschrieben ist. Beispielsweise werden die Schritte unter Verwendung von Einrichtungen einer Steuereinheit des Getränkezubereitungsgerät durchgeführt.

In einem Schritt 301 wird ein Temperatursignal über eine Schnittstelle zu einem Temperatursensor eingelesen. Das Temperatursignal zeigt eine aktuelle Temperatur von in einem Wassertank bevorrateten Wasser an.

Wenn die von dem Temperatursignal angezeigte Temperatur innerhalb eines Unzulässigkeitsbereichs liegt, wird in einem Schritt 303 ein Aufforderungssignal an eine Schnittstelle zu einer Anzeigeeinrichtung des Getränkezubereitungsgeräts bereitgestellt. Dadurch wird die Anzeigeeinrichtung so angesteuert, dass dem Benutzer eine Aufforderung zum Befüllen des Wassertanks mit Wasser einer von der aktuellen Temperatur abweichenden Temperatur angezeigt wird. Beispielsweise zeigt die Aufforderung ein Befüllen des Wassertanks mit handwarmen Wasser an. Gemäß einem Ausführungsbeispiel wird im Schritt 303 ein erstes Aufforderungssignal bereitgestellt, um eine Aufforderung zum Befüllen des Wassertanks mit kühlem Wasser anzuzeigen, wenn die von dem Temperatursignal angezeigte Temperatur einen Heißwert überschreitet, und es wird ein zweites Aufforderungssignal bereitgestellt, um eine Aufforderung zum Befüllen des Wassertanks mit warmen Wasser anzuzeigen, wenn die von dem Temperatursignal angezeigte Temperatur einen Kaltwert unterschreitet. Beispielsweise liegt der Kaltwert bei 25°C oder 20°C und der Heißwert bei 45°C oder 50°C. Anschließend wird gemäß einem Ausführungsbeispiel erneut der Schritt 301 ausgeführt.

Wenn die von dem Temperatursignal angezeigte Temperatur dagegen innerhalb eines Sollbereichs liegt, wird in einem Schritt 305 ein Anweisungssignals an die Schnittstelle zu der Anzeigeeinrichtung des Getränkezubereitungsgeräts bereitgestellt. Beispielsweise umfasst der Sollbereich eine Temperatur zwischen 30°C und 40°.

Dadurch wird die Anzeigeeinrichtung so angesteuert, dass dem Benutzer eine Anweisung zum Einfüllen von Reinigungsmittel angezeigt wird. Ansprechend auf ein erfolgtes Einfüllen des Reinigungsmittels wird in einem Schritt 307 ein Durchführsignal zum Durchführen eines Reinigungsprozesses des Reinigungsvorgangs bereitgestellt. Ansprechend auf das Durchführsignal wird beispielsweise die in Figur 2 gezeigte Pumpe, der Thermoblock und/oder das Ventil des Getränkezubereitungsgeräts so angesteuert, dass unter Verwendung des Reinigungsmittels und des Wassers aus dem Wassertank die Reinigung auf von Getränkezubereitungsgeräten bekannte Weise durchgeführt wird.

Das Verfahren umfasst optional einen Schritt 309 des Bereitstellens eines Pumpsignals an eine Schnittstelle zu der Pumpe, um die Pumpe zu aktiveren, um eine Testmenge des in dem Wassertank bevorrateten Wassers zu dem Temperatursensor zu pumpen. Beispielsweise bewirkt das Pumpsignal ein Pumpen von weniger als 3ml oder weniger als 2ml Wasser aus dem Wassertank. Anschließend auf den Schritt 309 wird gemäß einem Ausführungsbeispiel ein Schritt 310 ausgeführt, um die Temperatur des Wassers unter Verwendung des Temperatursensors zu erfassen.

Optional umfasst das Verfahren einen Schritt 311 in dem ein Wert einer Auflösezeitdauer, die zwischen dem Einfüllen des Reinigungsmittels und einem Beginn eines Reinigungsprozesses des Reinigungsvorgangs liegt angepasst wird. Der Schritt 311 wird ausgeführt, wenn die von dem im Schritt 301 eingelesenem Temperatursignal angezeigte Temperatur innerhalb eines Toleranzbereichs liegt. Der Schritt 311 wird beispielsweise vor, zeitglich oder nach einem der Schritte 305, 307 ausgeführt. Beispielsweise wird im Schritt 311 der Wert der Auflösezeitdauer erhöht, wenn die von dem Temperatursignal angezeigte Temperatur innerhalb eines an eine Untergrenze des Sollbereichs anschließenden unteren Toleranzbereichs liegt. Entsprechend wird der Wert der Auflösezeitdauer verringert, wenn die von dem Temperatursignal angezeigte Temperatur innerhalb eines an eine Obergrenze des Sollbereichs anschließenden oberen Toleranzbereichs liegt.

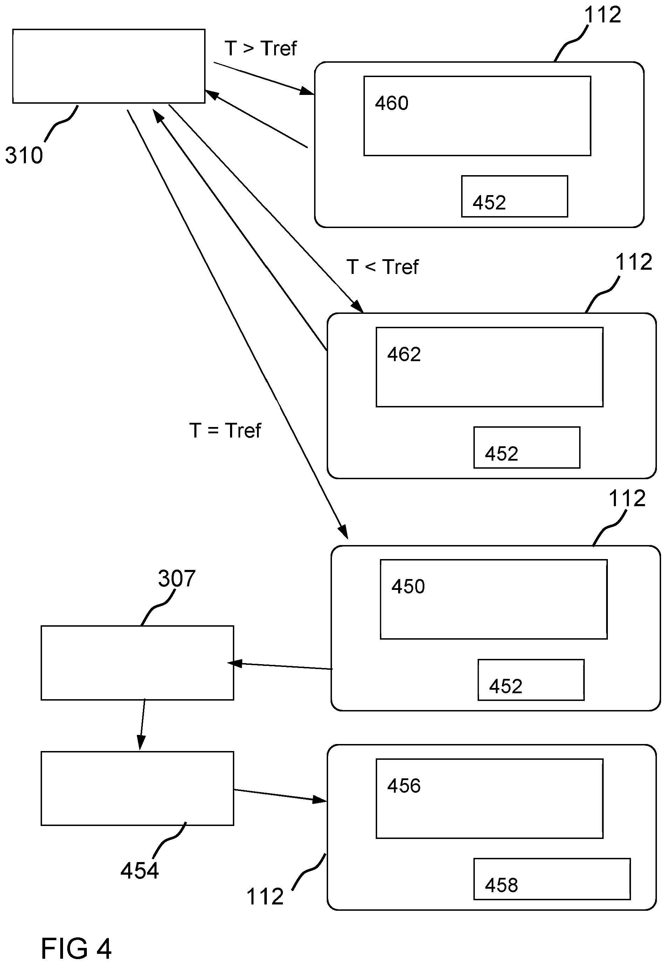

Figur 4 zeigt ein Ablaufdiagramm eines Ausführungsbeispiel eines Verfahrens zum Durchführen eines Reinigungsvorgangs für ein Getränkezubereitungsgerät, wie es beispielhaft anhand der vorangegangenen Figuren beschrieben ist.

Dazu wird gemäß einem Ausführungsbeispiel in einem Schritt 310 die Temperatur des Wassers im Tank erfasst. Wenn ein vorgegebener Temperaturbereich für eine Pflegelösung vorhanden ist, beispielsweise 35°C bis 45°C, die Temperatur als in einem Sollbereich T = Tref liegt, dann erfolgt eine Ausgabe in Form einer Anweisung 450 an den Benutzer, beispielsweise, dass die Temperatur ok ist und mit dem Reinigungsvorgang fortzufahren ist oder, dass Reiniger in den Tank einzugeben ist. Wenn der Benutzer die Anweise quittiert, beispielsweise durch Berühren eines Felds 452 "Fortsetzen" wird in einem Schritt 307 ein Reinigungsprogramm ausgeführt, beispielsweise in dem ein Reinigungsprozess gestartet wird. Ein Block 454 stellt ein Ende des Reinigungsvorgangs dar, das dem Nutzer beispielsweise durch eine entsprechende Mitteilung 456 mitgeteilt wird. Ein Feld 458 ermöglicht beispielsweise die Anwahl eines Startmenüs.

Wenn das Wasser zu kalt, T < Tref, oder zu heiß, T > Tref, ist, dann wird dem Benutzer gemäß einem Ausführungsbeispiel eine Aufforderung 460 "kälteres Wasser" in den Tank einfüllen oder "Temperatur hoch, bitte kaltes Wasser einfüllen" oder eine Aufforderung 462 "wärmeres Wasser" in den Tank einfüllen oder "Temperatur niedrig, bitte warmes Wasser einfüllen" angezeigt.

## Patentansprüche

1. Verfahren Betreiben eines Getränkezubereitungsgerätes (100), wobei das Verfahren die folgenden Schritte umfasst:
Einlesen (301) eines Temperatursignals (226) über eine Schnittstelle zu einem Temperatursensor (222), wobei das Temperatursignal (226) eine aktuelle Temperatur von in einem Wassertank (106) bevorrateten Wasser anzeigt;
Bereitstellen (303) eines Aufforderungssignals (232) an eine Schnittstelle zu einer Anzeigeeinrichtung (112) des Getränkezubereitungsgeräts (100), um eine Aufforderung (460, 462) zum Befüllen des Wassertanks (106) mit Wasser einer von der aktuellen Temperatur abweichende Temperatur anzuzeigen, wenn die von dem Temperatursignal (226) angezeigte Temperatur innerhalb eines Unzulässigkeitsbereichs liegt;
Bereitstellen (305) eines Durchführsignals zum Durchführen eines Reinigungsvorgangs oder einer Getränkezubereitung, wenn die von dem Temperatursignal (226) angezeigte Temperatur innerhalb eines Sollbereichs liegt.

2. Verfahren nach Anspruch 1, wobei das Verfahren zum Durchführen eines Reinigungsvorgangs für ein Getränkezubereitungsgerät (100) ausgebildet ist und nach dem Schritt zum Bereitstellen (303) des Aufforderungssignals (232) an eine Schnittstelle zu einer Anzeigeeinrichtung ferner folgenden Schritt umfasst:
Bereitstellen (305) eines Anweisungssignals (234) an eine Schnittstelle zu der Anzeigeeinrichtung (112) des Getränkezubereitungsgeräts (100), um eine Anweisung (450) zum Einfüllen von Reinigungsmittel (114) anzuzeigen, wenn die von dem Temperatursignal (226) angezeigte Temperatur innerhalb eines Sollbereichs liegt; und
Bereitstellen (307) eines Durchführsignals zum Durchführen eines Reinigungsprozesses des Reinigungsvorgangs ansprechend auf ein erfolgtes Einfüllen des Reinigungsmittels (114).

3. Verfahren nach Anspruch 1 oder 2, mit einem Schritt (309) des Bereitstellens eines Pumpsignals (228) an eine Schnittstelle zu einer Pumpe (214), um eine Testmenge des in dem Wassertank (106) bevorrateten Wassers zu dem Temperatursensor (222) zu pumpen.

4. Verfahren gemäß Anspruch 3, bei dem das Pumpsignal (228) ein Pumpen der Teilmenge bewirkt, wobei die Teilmenge kleiner als 3ml ist.

5. Verfahren gemäß einem der Ansprüche 2 bis 4, mit einem Schritt (311) des Anpassens eines Werts einer Auflösezeitdauer, die zwischen dem Einfüllen des Reinigungsmittels (114) und einem Beginn eines Reinigungsprozesses des Reinigungsvorgangs liegt, wenn die von dem Temperatursignal (226) angezeigte Temperatur innerhalb eines Toleranzbereichs liegt.

6. Verfahren gemäß Anspruch 5, bei dem im Schritt (311) des Anpassens der Wert der Auflösezeitdauer erhöht wird, wenn die von dem Temperatursignal (226) angezeigte Temperatur innerhalb eines an eine Untergrenze des Sollbereichs anschließenden unteren Toleranzbereichs liegt, und der Wert der Auflösezeitdauer verringert wird, wenn die von dem Temperatursignal (226) angezeigte Temperatur innerhalb eines an eine Obergrenze des Sollbereichs anschließenden oberen Toleranzbereichs liegt.

7. Verfahren gemäß einem der Ansprüche 2 bis 6, bei dem im Schritt (303) des Bereitstellens des Aufforderungssignals (232) das Aufforderungssignal (232) bereitgestellt wird, um die Aufforderung zum Befüllen des Wassertanks (106) mit handwarmen Wasser anzuzeigen.

8. Verfahren gemäß einem der Ansprüche 2 bis 7, bei dem im Schritt (303) des Bereitstellens des Aufforderungssignals (232) das Aufforderungssignal (232) bereitgestellt wird, um eine Aufforderung (460) zum Befüllen des Wassertanks (106) mit kühlem Wasser anzuzeigen, wenn die von dem Temperatursignal (226) angezeigte Temperatur einen Heißwert überschreitet, und bei dem im Schritt des Bereitstellens des Aufforderungssignals (232) das Aufforderungssignal (232) bereitgestellt wird, um eine Aufforderung (462) zum Befüllen des Wassertanks (106) mit warmen Wasser anzuzeigen, wenn die von dem Temperatursignal (226) angezeigte Temperatur einen Kaltwert unterschreitet.

9. Verfahren gemäß einem der Ansprüche 2 bis 8, bei dem der Unzulässigkeitsbereich eine Temperatur von weniger als 25°C, insbesondere von weniger als 20°C, sowie eine Temperatur von mehr als 45°C, insbesondere von mehr als 50°C umfasst.

10. Verfahren gemäß einem der 2 bis 9 Ansprüche, bei dem der Sollbereich eine Temperatur zwischen 30°C und 40°C umfasst.

11. Steuereinheit (224), die ausgebildet ist, um die Schritte eines Verfahrens gemäß einem der vorangegangenen Ansprüche in entsprechenden Einheiten auszuführen und/oder anzusteuern.

12. Computer-Programmprodukt mit Programmcode zur Durchführung des Verfahrens nach einem der Ansprüche 1 bis 10, wenn das Computer-Programmprodukt auf einer Steuereinheit gemäß Anspruch 11 ausgeführt wird.

13. Getränkezubereitungsgerät (100) mit folgenden Merkmalen:
einem Wassertank (106) zum Bevorraten von Wasser;
einem Thermoblock (216) zum Temperieren des Wassers für eine Getränkezubereitung oder einen Reinigungsvorgangs;
einer Pumpe (214) zum Pumpen des Wassers aus dem Wassertank (106) zu dem Thermoblock (216); und
einem Temperatursensor (222), der ausgebildet ist, um ein Temperatursignal (226) bereitzustellen, das eine aktuelle Temperatur des in dem Wassertank (106) bevorrateten Wasser anzeigt.

14. Getränkezubereitungsgerät (100) gemäß Anspruch 13, bei dem der Temperatursensor (222) an einer den Wassertank (106) mit der Pumpe (214) verbindenden Leitung angeordnet ist.

15. Getränkezubereitungsgerät (100) gemäß Anspruch 13 oder 14, mit einer Steuereinheit (224) gemäß Anspruch 11.
